# EUROPEAN PATENT SPECIFICATION

(11) **EP 3 117 563 B1**
(45) Date of publication and mention of the grant of the patent: **17.10.2018**
(21) Application number: 15707667.0
(22) Date of filing: 05.03.2015
(51) Int. Cl.: H04L 12/24, H04L 29/08, G06F 9/445

(54) **AUTOMATICALLY CONNECTING A MOBILE DATA MODEM TO A CPE DEVICE**
AUTOMATISCHER ANSCHLUSS EINES MOBILEN DATENMODEMS AN EINE CPE-VORRICHTUNG
CONNEXION AUTOMATIQUE D'UN MODEM DE DONNÉES MOBILES À UN DISPOSITIF DE CPE

(30) Priority: 10.03.2014 EP 14305341
(43) Date of publication of application: 18.01.2017
(73) Proprietor: Thomson Licensing, 92130 Issy-les-Moulineaux (FR)
(72) Inventor: HAEGDORENS, Davy, B-3980 Tessenderlo (BE)
(74) Representative: Huchet, Anne
(86) International application number: PCT/EP2015/054565
(87) International publication number: WO 2015/135820

(56) References cited:
- EP-A1- 1 746 767
- WO-A2-03/012577
- CN-A- 102 902 518
- US-A- 5 675 831
- US-A1- 2012 042 057

## Description

### TECHNICAL FIELD

The invention relates to the field of customer-premises equipment devices being coupled to an IP network, for example via a digital subscriber line to a service provider network.

### BACKGROUND OF THE INVENTION

Residential gateways are widely used to connect devices in the home of an end-user to the Internet or any other wide area network (WAN). Residential gateways use in particular digital subscriber line (DSL) technology that enables a high data rate transmission over copper lines or optical lines. During the years, several DSL standards have been established, differing in data rates and in range, for example ADSL and VDSL, which are referred to in this context as xDSL. Also optical transmission for Internet services is well known, for example fiber-to-the-home (FTTH) and fiber-to-the premises (FTTP). Residential gateways, but also other devices such as routers, WLAN (Wireless Local Area Network) forwarders, switches, telephones and set-top boxes, are understood in this context as customer premises equipment (CPE) devices.

Many SOHO (Small Offices, Home Offices) and SME (Small/Medium Enterprises) businesses have chosen for xDSL as their access technology, which is typically cheaper than using leased lines. However, a drop-out of the xDSL-line can have expensive consequences for these companies due to inaccessibility of the Internet and e-mail and, therefore, some customers request a fallback solution that provides an alternative path, when the xDSL line is down.

ISDN backup solutions are already known for gateways. When a loss of Internet connectivity is detected on the xDSL line, the gateway automatically switches to ISDN.

An alternative approach is to switch to 2G/3G and 4G mobile access technologies such as GPRS, UMTS and LTE, when Internet connectivity is not available via the xDSL line. To accomplish this, a mobile data modem, also known as mobile USB dongle, is placed into an USB slot of a gateway, so that IP connectivity via a mobile network becomes possible.

US2012/0042057 discloses a method for updating parameters related to the operation of a customer premise equipment (CPE). After the CPE has connected to a server, if the parameters in the server are different from the parameters stored in the CPE (in a configuration file) the parameters in the server are updated in the CPE.

### SUMMARY OF THE INVENTION

The invention is set out in the appended set of claims. The embodiments and/or examples of the following description which are not covered by the appended claims are considered as not being part of the present invention.

The method for automatically connecting a mobile data modem to a customer premises equipment (CPE) device includes mobile data modem specific parameters in a configuration file of the mobile data modem. When the mobile data modem is attached to the customer premises equipment device, the CPE device then reads the configuration file and matches the parameters of the mobile data modem with a parameter table fitting with the parameters of the mobile data modem. The customer premises equipment device comprises for example at least two parameter tables having different fields according to a specific list of parameters. The configuration file includes in particular product- and/or vendor- specific parameters.

In another aspect of the invention, the method for automatically connecting a mobile data modem to an access gateway comprises: providing mobile data modem specific parameters in a configuration file of the mobile data modem, storing the configuration file including the parameters in the mobile data modem, including product tables for specific mobile data modems in the access gateway, and inserting the mobile data modem in an USB slot of the access gateway. When the mobile data modem is attached to the gateway, then the access gateway reads the configuration file, matches the parameters of the mobile data modem as included in the configuration file with a product table fitting with the parameters of the mobile data modem, selects the matched product table, and loads an USB driver in the access gateway in accordance with the selected product table for the operation of the mobile data modem.

The mobile data modem is in particular a cell phone 2G/3G/4G modem.

The customer premises equipment device comprises a microprocessor and product tables, each product table comprising parameters of a specific mobile data modem, wherein the microprocessor is adapted to read a configuration file of a mobile data modem, after the mobile data modem is connected to the customer premises equipment device, and to select one of the product tables matching with the parameters of the mobile data modem for an operation with the mobile data modem. The configuration file includes specific parameters of the mobile data modem.

In a preferred embodiment, the mobile data modem is connected to an USB port of the customer premises equipment device, and the microprocessor is adapted to load an USB driver in the customer premises equipment device in accordance with the selected product table for the operation of the mobile data modem. The customer premises equipment device comprises in particular at least two parameter tables having different fields according to a specific list of parameters, and the configuration file and the product tables comprise a product identification number (PID) and/or a vendor identification number (VID), for selecting a product table having the correct parameters for the operation of the mobile data modem together with the customer premises equipment device.

The CPE device is in particular an access gateway, a residential gateway, an enterprise gateway, a router, a switch, or a set-top box.

A computer readable storage medium includes instructions, which, when performed by the microprocessor of the CPE device, performs the method for connecting a mobile data modem automatically to the CPE device, without requiring any manual configuration of a user.

### BRIEF DESCRIPTION OF THE DRAWINGS

Preferred embodiments of the invention are explained in more detail below by way of example with reference to schematic drawings, which show:
Fig. 1 a mobile data modem being adapted for an operation with a CPE device, and
Fig. 2 method steps for an automatic setup of the mobile data modem with the CPE device.

### Detailed Description of Preferred Embodiments

In the following description, example methods for automatically connecting a mobile data modem (MDM) to a customer-premises equipment (CPE) device are described. For purposes of explanation, various specific details are set forth in order to provide a thorough understanding of preferred embodiments. It will be evident, however, to one skilled in the art that the present invention may be practiced without these specific details.

The CPE device includes in a preferred embodiment a controller, e.g. a microprocessor, a non-volatile memory, in which an operating system is stored, a volatile memory for the operation of the CPE device, a Wi-Fi node for a wireless operation and a broadband connection, e.g. an xDSL connection. A CPE device of this kind is for example an access gateway, which has a central position within a wireless local area network (WLAN). The access gateway is in particular a residential gateway, a business gateway, a router or an Internet switch.

The CPE device is adapted to connect via the xDSL connection with a network service provider network for providing Internet services. Alternatively, the CPE device uses an LTE connection or is a cable modem for providing Internet services.

The CPE device includes further a mobile data modem as a backup solution, in case the connection with the Internet service provider breaks and a data transmission is no more possible. The mobile data modem, also known as a mobile USB dongle, uses in particular 2G, 3G and 4G mobile access technologies such as GPRS, UMTS and/or LTE and is inserted into an USB slot of the CPE device. The mobile data modem allows, therefore, a backup data transmission with the Internet, in case the Internet connection is broken.

Customers constantly ask to implement new mobile USB dongles for CPE devices to have a backup connection to the traditional xDSL / ETHWAN connection. The implementation which is needed in most cases only makes the driver recognize the dongle which is connected to the gateway. The customer needs to wait for a new build if this needs to be done via software and it will bring an extra workload as each software change needs to be tested internally. Therefore, a solution is needed so that a customer can add and configure his new dongles via a command line interface (CLI) if they can be supported for one of the newly implemented drivers. The complete workload of implementation and testing will be moved towards the customer. Only in cases of issues it is needed to make a fix or a change to the code.

For the mobile data modems, several types can be used, being provided by different manufacturers, for which a respective USB driver is required in the access gateway. As the USB drivers, for example the following company-specific Linux drivers are used: cdc_ncm.c, hw_cdc_driver.c and qmi_wwan.c. These drivers need manufacturer-specific parameters of the respective mobile data modem so that an Internet-Protocol-over-Ethernet (IPOE) connection can be provided for the CPE device.

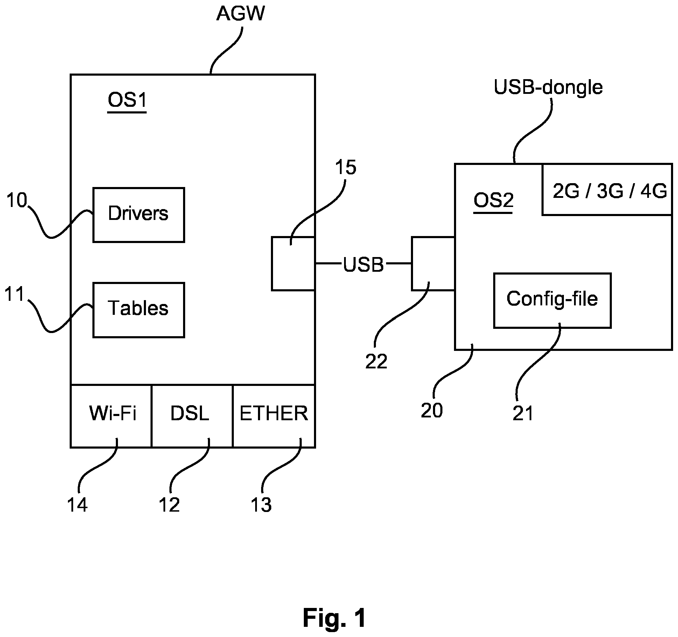

Some details of a CPE device AGW and a mobile data modem (MDM) are schematically depicted in figure 1. For an operation with an MDM 20, an operating system OS1 of the CPE device AGW requires in addition USB drivers 10 and product tables 11. The CPE device AGW includes further ports for a DSL connection 12 and an Ethernet connection 13, and a Wi-Fi node 14, as described before, and an USB port 15.

The operating system OS2 of the MDM 20 includes a configuration file 21 comprising vendor specific parameters for operating the MDM 20 as a data modem for 2G, 3G and/or 4G radio, when the MDM 20 is connected with its USB port 22 with the USB port 15 of the CPE device AGW.

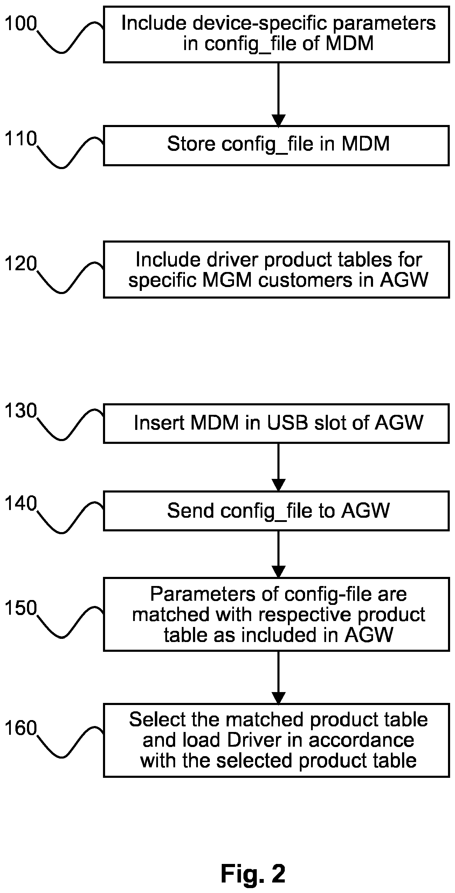

For an automatic setup of the mobile data modem 20 with the CPE device AGW, a method is used, as depicted in Fig. 2. In a first step 100, device specific parameters of the mobile data modem are entered in the configuration file 21 of the mobile data modem. The configuration file including the device specific parameters is stored in the mobile data modem, step 110. The steps 100 and 110 are already provided by the manufacturer of the mobile data modem. The parameters are stored for example by using a command line interface (CLI).

For the drivers cdc_ncm.c, hw_cdc_driver.c and
qmi_wwan.c, for example the following parameters have to be included:
A1) USB Vendor and Interface property:
   Here the dependance is on the following:
   a) vendor id
   b) Class
   c) SubClass
   d) Protocol

Example : E392 and E3276, known LTE sticks, use these parameters.
A2) USB vendor/Product ID and Interface number:
   Here the dependance is on the following:
   a) Vendor
   b) Product
   c) Interface Number (where the driver needs to be attached)

Example : ZTE MF820D uses these parameters.

In another step 120, product tables are included in the CPE device AGW comprising fields, which are specific for different kinds of mobile data modems, e.g. with regard to a specific customer, see above. This step is performed by the manufacturer of the CPE device.

An end-user, which uses the CPE device AGW in his WLAN, can then buy the mobile data modem 20 as a backup solution and insert the mobile data modem 20 in the USB port 15 of the CPE device AGW, step 130. The CPE device AGW then initializes the mobile data modem 20, during which initialization the parameters as stored in the configuration file 21 of the mobile data modem 20 are transferred to the CPE device, step 140. The CPE device then tries to match these parameters with one of the product tables 11 included in the CPE device AGW, and if one of the product tables 11 matches with a parameter set of the mobile data modem 20, this product table is selected and the parameters are stored in the respective fields of this product table, step 150. The CPE device AGW then loads the respective USB driver 10 related to this selected product table, step 160, so that the CPE device can recognize the mobile data modem 20, and the mobile data modem 20 is then ready for operation with the CPE device AGW.

### Implementation details:

1)Additional parameters in "mobile device add" CLI
   The following parameters needs to be added as part of "mobile device add" CLI command
   a) class - Class of the interface where the driver needs to be attached (default - 0)
   b) subclass - sub class of the interface where the driver needs to be attached (default - 0)
   c) Protocol - protocol of the interface where the driver needs to be attached (default - 0)
   d) interface number - interface number where the driver needs to be attached (default - 0)
   e) driver - (QMI/NCI/HWCDC) specifying which driver needs to be attached.
2) All these added details need to be stored in the configuration file of the dongle in the following path (/tmp/mobile_conf - This is already an existing file used for passing other parameters like modeswitch/forceusb etc)
3) These details stored in the configuration file will be read by an UMTS custom script: umts_custom script
   The following actions will be done in umts_custom:
   After a mode switch: modeswitch of the dongle (existing in the script)
   a) Based on driver (QMI/NCM/HWCDC) - the corresponding driver will be loaded using a Linux command: insmod
   b) using insmod we can send parameters to the module init function. vendorid/class/subclass/protocol/product/InterfaceNumber will be sent as parameters. (an approach taken for a dynamic loading)
4) Actions on the driver level
   a) In the driver product_table list reserve the first 2 entries for adding devices dynamically
      product_table[0] - reserved for adding based on vendorid/class/subclass/protocol (see A1)
      product_table[1] - reserved for adding based on vendor/product/InterfaceNumber (see A2)
   b) Get the module parameters in the init function.
   c) Based on the details passed the corresponding entry in the product_table will be filled.
      a) If vendorid/class/subclass/protocol is not equal to 0 (default value) - product_table[0] will be populated, in accordance with par. A1.
      b) If vendor/product/InterfaceNumber is not equal to 0 (default value) - product_table[1] will be populated, in accordance with par. A2.
      c) all other combination of input will not be considered.

### Assumption:

1) The USB dongle can attach to only one of the USB drivers.
2) The USB dongle can attach only based on one of the 2 above given approaches A1, A2: only corresponding details will be passed.

The mobile USB dongles for mobile radio can be configured, therefore, on the command line interface (CLI). Up until now, only USB dongles could be used which use Linux USB option.c and cdc_acm.c open source drivers. These two drivers provide a way for point-to-point protocol (PPP) over mobile on the gateway. New USB dongles can be added with the invention on the fly by configuring the product-ID (PID) and/or vendor-ID (VID) in the configuration file, which indicates the USB driver how to attach to the endpoints.

The USB driver is attached to the USB dongle's endpoints if it recognizes the USB class which needs to be defined in the USB driver. By configuring these parameters in the configuration file, the USB driver will be able to attach to new USB dongles which are configured via the CLI instead of a c program code.

The invention resides in the claims herein after appended.

## Claims

1. A method for connecting a mobile data modem (20) to an customer premise equipment, comprising
reading parameters specific to the mobile data modem included in a configuration file (21) stored in the mobile data modem after the mobile data modem is connected to the customer premise equipment,
matching the parameters of the mobile data modem as included in the configuration file with a product table (11) included in the customer premise equipment and fitting the product table with the parameters of the mobile data modem,
selecting the fitted product table, and
loading a driver of the mobile data modem (10) in the customer premise equipment in accordance with the selected product table for the operation of the mobile data modem.

2. The method of claim 1, the customer premises equipment device comprising at least two parameter tables having different fields according to a specific list of parameters.

3. The method of claim 1 or 2, comprising a product identification number, PID, and/or vendor identification number, VID, in the configuration file.

4. The method of one of the preceding claims, wherein the mobile data modem is a cell phone modem using 2G/3G/4G mobile access technologies.

5. Computer readable storage medium for storing therein instructions, which, when executed by a microprocessor, perform a method according to one of the preceding claims.

6. Customer premises equipment device, CPE, comprising a microprocessor and product tables (11), each product table comprising parameters of a specific mobile data modem (20), wherein the microprocessor is adapted to
read parameters specific the mobile data modem included in a configuration file (21) stored in the mobile data modem after the mobile data modem is connected to the customer premise equipment,
match the parameters of the mobile data modem as included in the configuration file with one of the product tables and fitting the one of the product table with the parameters of the mobile data modem,
select the fitted product table, and
load a driver (10) of the mobile data modem in the customer premise equipment in accordance with the selected product table for the operation of the mobile data modem.

7. The customer premises equipment device of claim 6, wherein the customer premises equipment device is an access gateway, a residential gateway, an enterprise gateway, a router, a switch, or a set-top box.

8. The customer premises equipment device of claim 6 or 7, wherein the customer premises equipment device comprises at least two parameter tables having different fields according to a specific list of parameters.

9. The customer premises equipment device of one of the claims 6 to 8, wherein the configuration file and the product tables comprise a product identification number, PID, and/or a vendor identification number VID.

## Patentansprüche

1. Verfahren zum Verbinden eines mobilen Datenmodems (20) mit einem Teilnehmergerät, wobei das Verfahren umfasst:
Lesen von für das mobile Datenmodem spezifischen Parametern, die in einer Konfigurationsdatei (21) enthalten sind, die in dem mobilen Datenmodem gespeichert worden ist, nachdem das mobile Datenmodem mit dem Teilnehmergerät verbunden worden ist,
Gleichheitsprüfung der Parameter des mobilen Datenmodems, wie sie in der Konfigurationsdatei enthalten sind, mit einer Produkttabelle (11), die in dem Teilnehmergerät enthalten ist, und Anpassen der Produkttabelle mit den Parametern des mobilen Datenmodems,
Auswählen der angepassten Produkttabelle, und
Laden eines Treibers des mobilen Datenmodems (10) in das Teilnehmergerät in Übereinstimmung mit der ausgewählten Produkttabelle für den Betrieb des mobilen Datenmodems.

2. Verfahren nach Anspruch 1, wobei die Teilnehmergerätevorrichtung mindestens zwei Parametertabellen umfasst, die in Übereinstimmung mit einer spezifischen Liste von Parametern unterschiedliche Felder besitzen.

3. Verfahren nach Anspruch 1 oder 2, das in der Konfigurationsdatei eine Produktkennzeichnungsnummer, PID, und/oder eine Händlerkennzeichnungsnummer, VID, umfasst.

4. Verfahren nach einem der vorhergehenden Ansprüche, wobei das mobile Datenmodem ein Mobiltelefonmodem ist, das 2G/3G/4G-Mobilfunkzugangstechnologien verwendet.

5. Computerlesbares Speichermedium zum Speichern von Anweisungen darin, die, wenn sie durch einen Mikroprozessor ausgeführt werden, ein Verfahren nach einem der vorhergehenden Ansprüche ausführen.

6. Teilnehmergerätevorrichtung, CPE, die einen Mikroprozessor und Produkttabellen (11) umfasst, wobei jede Produkttabelle Parameter eines spezifischen mobilen Datenmodems (20) umfasst, wobei der Mikroprozessor ausgelegt ist zum:
Lesen von für das mobile Datenmodem spezifischen Parametern, die in einer Konfigurationsdatei (21) enthalten sind, die in dem mobilen Datenmodem gespeichert worden ist, nachdem das mobile Datenmodem mit dem Teilnehmergerät verbunden worden ist,
Gleichheitsprüfung der Parameter des mobilen Datenmodems, wie sie in der Konfigurationsdatei enthalten sind, mit einer der Produkttabellen und Anpassen der einen der Produkttabelle mit den Parametern des mobilen Datenmodems, Auswählen der angepassten Produkttabelle, und
Laden eines Treibers (10) des mobilen Datenmodems in das Teilnehmergerät in Übereinstimmung mit der ausgewählten Produkttabelle für den Betrieb des mobilen Datenmodems.

7. Teilnehmergerätevorrichtung nach Anspruch 6, wobei die Teilnehmergerätevorrichtung ein Access Gateway, ein Residential Gateway, ein Unternehmens-Gateway, ein Router, ein Switch oder eine Set-Top-Box ist.

8. Teilnehmergerätevorrichtung nach Anspruch 6 oder 7, wobei die Teilnehmergerätevorrichtung mindestens zwei Parametertabellen mit unterschiedlichen Feldern in Übereinstimmung mit einer spezifischen Liste von Parametern umfasst.

9. Teilnehmergerätevorrichtung nach einem der Ansprüche 6 bis 8, wobei die Konfigurationsdatei und die Produkttabellen eine Produktkennnummer, PID, und/oder eine Händlerkennnummer, VID, umfassen.

## Revendications

1. Procédé pour connecter un modem de données mobiles (20) à un équipement de site client, comprenant
la lecture de paramètres spécifiques au modem de données mobiles inclus dans un fichier de configuration (21) stocké dans le modem de données mobiles une fois le modem de données mobiles connecté à l'équipement de site client,
la mise en correspondance des paramètres du modem de données mobiles inclus dans le fichier de configuration avec une table de paramètres (11) incluse dans l'équipement de site client et l'adaptation de la table de paramètres aux paramètres du modem de données mobiles,
la sélection de la table de paramètres adaptée, et le chargement d'un pilote du modem de données mobiles (10) dans l'équipement de site client conformément à la table de paramètres sélectionnée pour le fonctionnement du modem de données mobiles.

2. Procédé selon la revendication 1, le dispositif d'équipement de site client comprenant au moins deux tables de paramètres comportant différents champs selon une liste de paramètres spécifique.

3. Procédé selon la revendication 1 ou 2, comprenant un numéro d'identification de produit (PID) et/ou un numéro d'identification de vendeur (VID) dans le fichier de configuration.

4. Procédé selon l'une des revendications précédentes, dans lequel le modem de données mobiles est un modem cellulaire utilisant les technologies de téléphonie mobile 2G/3G/4G.

5. Support de stockage lisible par ordinateur sur lequel sont stockées des instructions qui, lorsqu'elles sont exécutées par un processeur, effectuent le procédé selon l'une des revendications précédentes.

6. Dispositif d'équipement de site client (CPE), comprenant un microprocesseur et des tables de paramètres (11), chaque table de paramètres comprenant des paramètres d'un modem de données mobiles (20) spécifique, dans lequel le microprocesseur est adapté pour
lire des paramètres spécifiques au modem de données mobiles inclus dans un fichier de configuration (21) stocké dans le modem de données mobiles une fois le modem de données mobiles connecté à l'équipement de site client,
mettre en correspondance des paramètres du modem de données mobiles inclus dans le fichier de configuration avec l'une des tables de paramètres et adapter la table de paramètres aux paramètres du modem de données mobiles,
sélectionner la table de paramètres adaptée, et
charger un pilote (10) du modem de données mobiles dans l'équipement de site client conformément à la table de paramètres sélectionnée pour le fonctionnement du modem de données mobiles.

7. Dispositif d'équipement de site client selon la revendication 6, dans lequel le dispositif d'équipement de site client est une passerelle d'accès distant, une passerelle résidentielle, une passerelle d'entreprise, un routeur, un commutateur ou un boîtier adaptateur.

8. Équipement de site client selon la revendication 6 ou 7, dans lequel le dispositif d'équipement de site client comprend au moins deux tables de paramètres comportant différents champs selon une liste de paramètres spécifique.

9. Dispositif d'équipement de site client selon l'une des revendications 6 à 8, dans lequel le fichier de configuration et les tables de paramètres comprennent un numéro d'identification de produit (PID) et/ou un numéro d'identification de vendeur (VID).
